# EUROPEAN PATENT SPECIFICATION

(11) **EP 0 703 195 B1**
(45) Date of publication and mention of the grant of the patent: **08.03.2000**
(21) Application number: 95114115.9
(22) Date of filing: 08.09.1995
(51) Int. Cl.: C03B 11/10, C03B 11/12

(54) **Glass plunger insulating system**
Isoliersystem für einen Plunger
Système d'isolation pour un poinçon

(30) Priority: 23.09.1994 US 311195
(43) Date of publication of application: 27.03.1996
(73) Proprietor: CORNING INCORPORATED, Corning, N.Y. 14831 (US)
(72) Inventor: Chang, Zung-Sing, Corning Incorporated, Corning, NY 14831 (US)
(74) Representative: Boon, Graham Anthony

(56) References cited:
- US-A- 3 078 696
- US-A- 3 129 089
- US-A- 3 258 324
- US-A- 3 282 671
- US-A- 3 660 067

## Description

### BACKGROUND OF THE INVENTION

The present invention relates to methods and apparatus for insulating glass mold plungers, such as plungers used to press faceplates for television CRTs.

Typical glass pressing operations involve pressing a molten gob of glass between a female mold assembly and a male mold member, or plunger. In glass pressing operations, it is extremely important to maintain the press tooling within an optimum temperature range. Too high a temperature can cause the glass to stick to the tooling. Too low a temperature can cause the glass to cool too quickly, resulting in excessive stress, and sometimes glass breakage or checks, in the finished product. This is particularly true for plungers used to press television faceplates. In the pressing of television faceplates, it takes a substantial period of time to completely press the molten glass within the tooling. Such faceplates consist of a large flat "facewall" area which is surrounded by a sidewall portion which extends around the entire periphery of the facewall area.

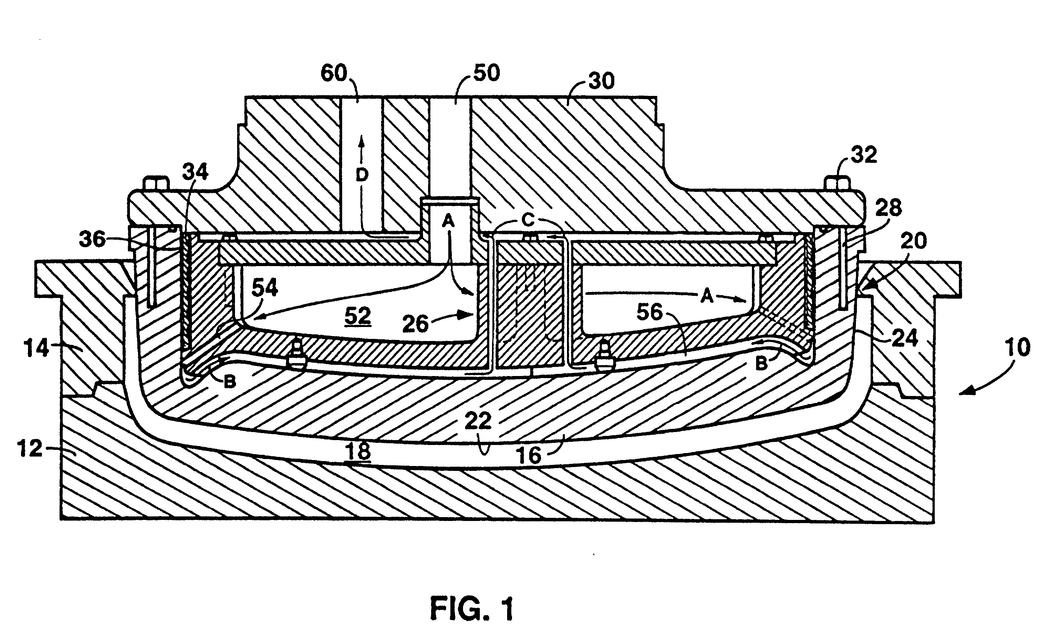

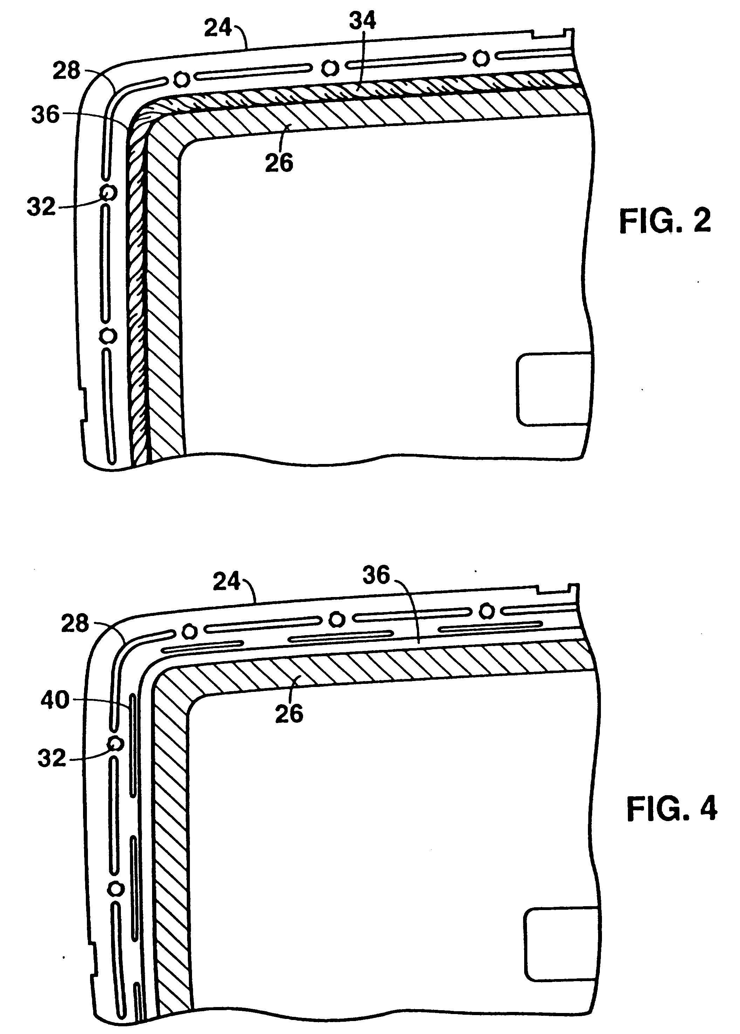

A typical prior art pressing device for forming television faceplates, having the features of the preamble of claim 1, is illustrated in Figs. 1 and 2. Typically, in such operations, a female mold assembly 10 is provided which consists of a concave lower mold portion 12 and a ring-like portion (hereinafter the ring) 14. The lower female mold portion 12 essentially molds the flat area of the faceplate, and the ring 14 molds the peripheral sides of the face plate. In the pressing operation, a gob of molten glass is placed into the middle of lower mold portion 12. A male mold member or plunger 16 then contacts the gob and spreads the gob into the mold cavity 18, which is formed by lower mold assembly 10 and plunger 16. The area of plunger 16 where the plunger 16 meets and contacts the lower mold assembly 10 (i.e., at the uppermost edge of the mold cavity) is known as the seal edge 20 of the plunger 16.

Because the glass must be pressed from a molten gob into a relatively large mold cavity, there is a relatively long time period between the time when the molten glass is first contacted by the plunger and the time when the molten glass is completely pressed within the mold cavity. Because of the substantial time delay between the beginning and end of the pressing operation, large temperature differences typically occur across the surface of the plunger 16. In particular, the face 22 of the plunger tends to remain much hotter than the sidewall 24 of the plunger, because it is in contact with the molten glass for a much longer period of time. Consequently, the face of the plunger has a tendency to stick when the tooling gets too hot. The sidewalls, on the other hand, remain much cooler than the face of the plunger 16. This is particularly true in the area of the seal edge 20, because this is the last area to be contacted by the molten glass. Consequently, the sidewalls, particularly in the area of the seal edge, have been a problem area for the occurrence of checks or cracks in the glass when the tooling gets too cool.

Because of the relatively large difference in temperatures between the face and the sidewalls of the plunger, there has in the past been a relatively small process window in which to operate. If the face of the plunger reaches a temperature of about 600°C, the face sticks to the molten glass. If the side walls reach a temperature of about 350°C, the side walls create checks or cracks on the molded glass. Thus, the desired "process temperature window" for the plunger is approximately between 350° and 600°C. It is desirable to maintain the highest and lowest plunger temperatures as far away from these temperatures as possible, to "open" this process window, that is, provide more room for error at the high end and low end of this process temperature window.

Consequently, it is desirable to alleviate the temperature differences between the face and the sidewalls of the plunger, to create more room for error and thereby open the process window. To accomplish this, prior art plungers have incorporated a water cooling system 26, in an effort to cool the hot face 22 of the plunger 16. The cooling system was retained within the plunger 16 by backplate 30, which was bolted to plunger 16 by bolts 32. At the same time, insulating cavities 28 were provided within the sidewall sections 24 of the plunger 16, to insulate the sidewall area 24 from the cooling effects of the cooling system 26. As best illustrated in Fig. 2, these elongated insulating cavities 28 were arranged around the entire periphery of the sidewall section 24, between each pair of bolts 32. In this prior art device, cooling system 26 circulated water against facewall 22 to thereby cool facewall 22. At the same time, the insulating cavities 28 insulated the sidewall 24 from the cooling effect of cooling system 26.

Figure 2 is a top view showing the insulating cavities 28, which are separated by solid areas in which bolts 32 are located to hold backplate 30 to plunger 16. Even with the insulating cavities in place, the temperature of the plunger at the seal edge 20 was still relatively cold due to cooling from the cooling system 26. This was partly due to water leakage from the water cooling system along the sidewall 24. Such water leakage caused increased cooling to the sidewall 24, resulting in increased checks and related type defects to the glass in the area of sidewall 24. To provide further insulation, cooling system 26 was wrapped with an insulating rope 34, around its entire periphery inside sidewall 24. The insulating rope greatly impeded the flow of water coolant along the sidewalls 24, and thus improved the insulation afforded sidewalls 24. As a consequence, the temperature of sidewalls 24 increased, reducing the temperature difference between the face and the sidewall of the plunger, and consequently opening the process window and improving the efficiency of the process. Unfortunately, installation of the insulation packing was very time consuming, as to be done properly the insulation had to be wound very accurately around the plunger. In addition, if the insulation packing was not properly installed, some water leakage still occurred, causing the sidewalls 24 to run too cool and causing the process to be inconsistent.

In addition, such insulation packing must be wedged tightly to minimize water leakage along the sidewall 24 of the plunger. Consequently, removal of the cooling system 26 from the plunger 16 sometimes required hitting the cooling system 26 with a mallet, resulting in increased risk of damage to the tooling.

In addition, in the prior art device illustrated in Figs, 1 and 2, the temperature along the sidewall typically varied, during a production pressing operation, from 380°C at the bolt holes to 520°C in areas between the bolts 32. The face of the plunger for such a process was typically about 560°C, for a total plunger temperature range (from the coldest temperature to the hottest temperature) of 380 to 560°C. This relatively large temperature difference made operating within the process temperature window (about 350° to 600°C) somewhat difficult.

By way of prior art, attention is also directed to US-A-3078696, which discloses a plunger for forming glass articles by pressing glass in a mold, the plunger comprising a groove which extends around the entire periphery of the plunger and through which liquid coolant flows along the inner surface of the base portion of the plunger.

It would be desirable to design a more efficient plunger, which is capable of achieving a more uniform overall temperature and maintaining this more uniform temperature throughout the manufacturing operation. It would also be desirable to design such a plunger which does not require the use of insulation rope.

### SUMMARY OF THE INVENTION

The present invention provides a plunger of the type defined in the preamble of claim 1 characterized in that a second set of elongated insulating cavities forming a row of cavities is spaced within said peripheral sidewall portion of said plunger, radially inwardly from the first set of insulating cavities.

The two sets of insulating cavities insulate the sidewall from the cooling effects of the fluid cooling system.

The present invention further provides an apparatus for pressing television faceplates which consists of a lower mold member and a plunger as defined above. Preferably, the cooling system or plunger is equipped with flow restricting structure to impede flow of the cooling fluid against the sidewall of the plunger.

The first and second sets of insulating cavities are preferably provided around the entire periphery of the sidewall, with each cavity in each row being arranged end to end to on another around the periphery of the sidewall. Between each cavity in each row is an area of solid metal plunger material. In the preferred embodiment, the first and second set of insulating cavities are staggered to one another. By staggered, it is meant that the cavities in each row are adjacent to the solid metal areas in the adjacent row of insulating cavities. In this way, there is no area of the sidewall which is not provided with insulation from an insulating cavity.

### BRIEF DESCRIPTION OF THE DRAWINGS

Figure 1 illustrates a side cross-sectional view of a plunger and lower mold assembly of the prior art.

Figure 2 illustrates a top cross-sectional view of a corner of the sidewall of the plunger illustrated in Fig. 1.

Figure 3 illustrates a side cross-sectional view of a plunger and lower mold assembly in accordance with the present invention.

Figure 4 illustrates a top cross-sectional view of a corner of the sidewall of the plunger illustrated in Fig. 3.

### DETAILED DESCRIPTION OF THE INVENTION

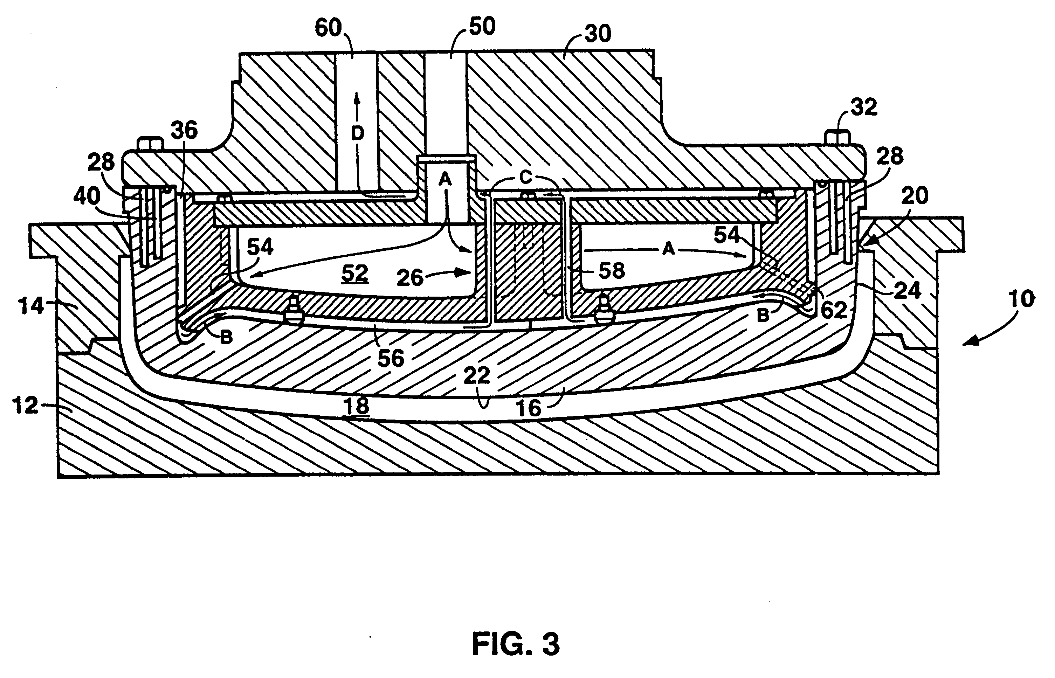

Figures 3 and 4 illustrate a plunger in accordance with the present invention. Lower mold assembly 10 consists of lower mold member 12 and ring member 14. Plunger 16 presses into female mold assembly 10 to form mold cavity 18. Plunger 16 comprises of face portion 22 and sidewall portion 24. The seal edge 20 of plunger 16 contacts the inside of ring 14 to form mold cavity 18. A cooling system 26 is provided within the interior of plunger 16. As can be seen in Fig. 3, during the molding operation, face 22 of plunger 16 will contact the glass, while the inside of the plunger 16 will be in contact with water or some other coolant distributed by cooling system 26. The coolant cools facewall 22, to compensate for the much longer time period in which the molten glass contacts face 22, compared to sidewall 14. To reduce the cooling effect the cooling system 26 has on sidewall 24, a first set of insulating cavities 28 and a second set of insulating cavities 40 are provided within the sidewall of plunger 16. The addition of a second row of insulating cavities 40 enables the removal of the insulation packing without causing the plunger side-wall temperature to run too cold.

Figure 4 illustrates the preferred location of the second row of insulating cavities 40 with respect to the first row of cavities 28. In the preferred embodiment, the first set of insulating cavities 28 are staggered with respect to the second row of insulating cavities 40. By staggered, it is meant that the cavities in each row are adjacent to solid metal areas in the adjacent row of insulating cavities, as illustrated in Fig. 4. In this way, there is no area of the sidewall which is not provided with insulation from an insulating cavity. By staggering the individual insulating cavities, the sidewall sections in the area of the bolt holes are better insulated from the cooling effects of the water coolant. This caused the temperature of the sidewall to increase, in the area of the bolt holes, compared to prior art designs. As a result, temperature uniformity along the plunger side wall was greatly improved.

The insulating cavities 28 and 40 are preferably between about 40 and 100 mm long and between about 3 and 6 mm wide. In one preferred embodiment, the first set of cavities 28 are about 90 mm long and 5 mm wide, and the second set of insulating cavities 40 are about 75 mm long and 3 mm wide. The insulating cavities are preferably about 60 mm deep, and preferably extend below the area of the seal edge about 6 to 12 mm.

The operation of the device illustrated in Figs. 3 and 4 involves the following. A gob of molten glass is deposited into the middle of lower mold portion 12 of female mold assembly 10. Plunger 16 is then lowered until it contacts the molten glass gob and spreads the gob within mold cavity 18. After the pressing operation is complete, the plunger is removed from lower mold assembly 10, the ring 14 is removed, and the molded faceplate is then removed form lower mold member 12.

During the pressing operation, cooling fluid is circulated within the plunger by cooling system 26. Water is the preferred coolant, although other coolant materials could also be utilized. The water is pumped into the plunger through inlet pipe 50 and into distributer cavity 52, where it is dispersed towards the outside perimeter of the plunger, as indicated by directional arrows A. The water flows through distributer pipes 54, a plurality of which are disposed along sides of cooling system 26. The distributer pipes 54 distribute the water to facewall cooling cavity 56, as indicated by directional arrows B. Spacers are provided to keep the cooling system 26 spaced from the plunger, thereby forming cooling cavity 56. The water circulates through facewall cooling cavity 56 and out exit orifice 58, as illustrated by directional arrow C. The water then exits cooling system 26 through outlet pipe 60. The water may then be cooled and recirculated, if desired. The water cooling system 26 is provided with flanges 62 which extend out from the cooling system 26 and contact the inside surface of side wall 24. The flanges 62 serve to center the cooling system within the plunger, but due to expansion of the tooling during operation, water from the cooling system regularly leaks into the area of the sidewalls 24. One would think this to be a great problem, considering the problems with such leakage in prior art plungers. In prior art devices, insulating rope packing had to be employed to prevent such water leakage. However, surprisingly, the plunger of the present invention is able to operate within a smaller temperature range than that of the prior art devices (even those that utilized the insulating rope), even though such water leakage was a considerable problem in the prior art design.

If desired, insulating cavity 36 may be provided with insulation, such as insulating rope 34. However, it is preferred that such material be avoided, because of the difficulties explained above associated with its use. Such insulation is not necessarily needed, because even without such insulating material, the plunger of the present invention exhibits better temperature uniformity than plunger of the prior art which employed such insulating material. Thus, the disadvantages inherent with the use of insulating ropes and such materials can be avoided without sacrificing performance.

Plungers in accordance with the present invention have been tested under production conditions with very encouraging results. For example, in both of the prior art devices described above and the device of the present invention, the facewall temperature was about 560°C. However, in the prior art device described above, the temperature along the sidewall varied from 382°C at the bolt holes to 519°C between the bolts. In the design illustrated in Figs. 3 and 4, wherein the first and second rows of insulating cavities are employed, the temperature varied along the sidewall from about 488°C to about 517°C between the bolts. Thus, plunger sidewall temperature uniformity improved significantly over the prior art design. The improved design has several important advantages over prior art designs.

First, because there are two rows of insulating cavities 28 and 40, there is less total metal in the tooling to heat. Therefore, the plunger will reach operating temperature faster than with previous designs, decreasing start-up time. Because the majority of tooling damage occurs during start-up, decreasing start-up time also decreases the amount of tooling damage.

The elimination of insulation packing results in a number of advantages. First, the tedious task of installing the rope insulation material is eliminated. In addition, the difficulties in operating the process caused by packing inconsistencies from run to run is eliminated. Consequently, initial setup of process parameters is facilitated, as the process parameters will vary less from run to run.

Most importantly, the increase in temperature uniformity along the sidewall opens the process window, allowing for much greater flexibility in running the process.

## Claims

1. A plunger (16) for use in an apparatus for pressing television faceplates, the plunger having a facewall portion (22) and a peripheral sidewall portion (24), said plunger comprising a cooling system (26) in said plunger for circulating cooling fluid in said plunger; and a first set of elongated insulating cavities (28) spaced within said peripheral sidewall portion of said plunger and forming a row of cavities;
characterized in that a second set of elongated insulating cavities (40) forming a row of cavities is spaced within said peripheral sidewall portion (24) of said plunger, radially inwardly from the first set of insulating cavities (28).

2. The plunger of claim 1, wherein said cooling system (26) comprises flow channels (59) which circulate said fluid against the facewall portion (22) of the plunger (16).

3. The plunger of claim 1 or 2, wherein said cooling system (26) comprises flow restricting means (62) which impede flow of said fluid against the sidewall portion (24) of the plunger (16).

4. The plunger of any preceding claim, wherein said first and second sets of insulating cavities (28, 40) in said sidewall portion (24) extend around the entire periphery of said facewall portion (22).

5. The plunger of any preceding claim, wherein said first and second set of insulating cavities (28, 40) are staggered with respect to one another.

6. The plunger of any preceding claim, wherein said plunger (16) further comprises a backplate (30), and a plurality of bolts (32) which extend from said backplate into said sidewall portion (24), said backplate holding said cooling system (26) in said plunger.

7. The plunger of any preceding claim, wherein said insulating cavities (28, 40) in said first and second rows are between about 40 and 100 mm long and between about 3 and 6 mm wide.

8. The plunger of any preceding claim, wherein said plunger (16) has a seal edge (20), and wherein said insulating cavities (28, 40) in said first and second rows are at least 40 mm deep and extend below the area of the seal edge a distance of between about 6 and about 12 mm.

9. An apparatus for pressing television faceplates, comprising a plunger according to any one of the preceding claims, and a lower mold (12).

## Patentansprüche

1. Plunger (16) zur Verwendung in einer Vorrichtung zum Pressen von Fernseh-Frontscheiben, wobei der Plunger einen Frontwandabschnitt (22) und einen Umfangsseitenwandabschnitt (24) aufweist, und besagter Plunger ein Kühlsystem (26) in besagtem Plunger zum Zirkulieren von Kühlflüssigkeit in besagtem Plunger enthält; und ein erster Satz von langgestreckten Isolierkammern (28) vorgesehen ist, die innerhalb von besagtem Umfangsseitenwandabschnitt von besagtem Plunger verteilt sind und eine Reihe von Kammern bilden;
dadurch gekennzeichnet, daß ein zweiter Satz langgestreckter Isolierkammern (40), eine Reihe von Kammern bildend, in besagtem Umfangsseitenwandabschnitt (24) von besagtem Plunger radial einwärts vom ersten Satz von Isolierkammern (28) verteilt ist.

2. Plunger nach Anspruch 1, wobei besagtes Kühlsystem (26) Strömungskanäle (59) aufweist, welche besagte Flüssigkeit gegen den Frontwandabschnitt (22) des Plungers (16) strömen lassen.

3. Plunger nach Anspruch 1 oder 2, wobei besagtes Kühlsystem (26) Strömungsbegrenzungsmittel (62) enthält, welche eine Strömung besagter Flüssigkeit gegen den Seitenwandabschnitt (24) des Plungers (16) verhindern.

4. Plunger nach einem der vorhergehenden Ansprüche, wobei sich besagte erste und zweiter Sätze von Isolierkammern (28, 40) in besagtem Seitenwandabschnitt (24) über den gesamten Umfang von besagtem Seitenwandabschnitt (22) erstrecken.

5. Plunger nach einem der vorhergehenden Ansprüche, wobei besagte erste und zweite Sätze von Isolierkammern (28, 40) versetzt zueinander angeordnet sind.

6. Plunger nach einem der vorhergehenden Ansprüche, wobei besagter Plunger (16) weiterhin eine Rückwand (30) und eine Vielzahl von Bolzen (32) aufweist, die sich von besagter Rückwand in besagten Seitenwandabschnitt (24) erstrecken, wobei gesagte Rückwand das Kühlsystem (26) in besagtem Plunger enthält.

7. Plunger nach einem der vorhergehenden Ansprüche, wobei besagte Isolierkammern (28, 40) in besagter erster und zweiter Reihe zwischen ungefähr 40 und 100 mm lang und zwischen ungefähr 3 und 6 mm breit sind.

8. Plunger nach einem der vorhergehenden Ansprüche, wobei besagter Plunger (16) einen Dichtungsrand (20) aufweist, und wobei die besagten Isolierkammern (28, 40) in besagten ersten und zweiten Reihen wenigstens 40 mm tief sind und sich über eine Entfernung von zwischen ungefähr 6 und ungefähr 12 mm nach unten über den Bereich des Dichtungsrandes hinaus erstrecken.

9. Vorrichtung zum Pressen von Fernseh-Frontscheiben mit einem Plunger nach einem der vorhergehenden Ansprüche, und mit einem unteren Formteil (12).

## Revendications

1. Piston-plongeur (16) destiné à être utilisé dans un appareil de pressage de dalles d'écran de télévision, le piston-plongeur comportant une partie de paroi frontale (22) et une partie de paroi latérale périphérique (24), ledit piston-plongeur comprenant un système de refroidissement (26) dans ledit piston-plongeur, destiné à faire circuler un fluide de refroidissement dans ledit piston-plongeur ; et un premier ensemble de cavités isolantes allongées (28) espacées à l'intérieur de ladite partie de paroi latérale périphérique dudit piston-plongeur et formant une rangée de cavités,
caractérisé en ce qu'un second ensemble de cavités isolantes allongées (40) formant une rangée de cavités est espacé à l'intérieur de ladite partie de paroi latérale périphérique (24) dudit piston-plongeur, radialement vers l'intérieur du premier ensemble de cavités isolantes (28).

2. Piston-plongeur selon la revendication 1, dans lequel ledit système de refroidissement (26) comprend des canaux d'écoulement (59) qui font circuler ledit fluide contre la partie de paroi frontale (22) du piston-plongeur (16).

3. Piston-plongeur selon la revendication 1 ou 2, dans lequel ledit système de refroidissement (26) comprend des moyens de restriction d'écoulement (62) qui gênent l'écoulement dudit fluide contre la partie de paroi latérale (24) du piston-plongeur (16).

4. Piston-plongeur selon l'une quelconque des revendications précédentes, dans lequel lesdits premier et second ensembles de cavités isolantes (28, 40) dans ladite partie de paroi latérale (24) s'étendent autour de la périphérie entière de ladite partie de paroi frontale (22).

5. Piston-plongeur selon l'une quelconque des revendications précédentes, dans lequel lesdits premier et second ensembles de cavités isolantes (28, 40) sont décalés l'un par rapport à l'autre.

6. Piston-plongeur selon l'une quelconque des revendications précédentes, dans lequel ledit piston-plongeur (16) comprend en outre une plaque arrière (30), et une pluralité de boulons (32) qui s'étendent depuis ladite plaque arrière jusque dans ladite partie de paroi latérale (24), ladite plaque arrière maintenant ledit système de refroidissement (26) dans ledit piston-plongeur.

7. Piston-plongeur selon l'une quelconque des revendications précédentes, dans lequel lesdites cavités isolantes (28, 40) dans lesdites première et seconde rangées présentent une longueur d'environ 40 à 100 mm et une largeur d'environ 3 à 6 mm.

8. Piston-plongeur selon l'une quelconque des revendications précédentes, dans lequel ledit piston-plongeur (16) comporte un bord d'étanchéité (20), et dans lequel lesdites cavités isolantes (28, 40) dans lesdites première et seconde rangées présentent une profondeur d'au moins 40 mm et s'étendent au-dessous de la zone du bord d'étanchéité à une distance comprise entre environ 6 et environ 12 mm.

9. Appareil destiné à presser des dalles d'écran de télévision, comprenant un piston-plongeur selon l'une quelconque des revendications précédentes, et un moule inférieur (12).
